# NEW EUROPEAN PATENT SPECIFICATION

(11) **EP 0 679 145 B2**
(45) Date of publication and mention of the opposition decision: **12.06.2002**
(45) Mention of the grant of the patent: 17.04.1996
(21) Application number: 94904238.6
(22) Date of filing: 12.01.1994
(51) Int. Cl.: C03C 13/00

(54) **SALINE SOLUBLE INORGANIC FIBRES**
IN SALZLÖSUNG LÖSLICHE ANORGANISCHE FASERN
FIBRES SOLUBRES INORGANIQUES SALINES

(30) Priority: 15.01.1993 WO PCT/GB93/00085; 15.01.1993 MX 9300200; 09.07.1993 GB 9314236
(43) Date of publication of application: 02.11.1995
(60) Divisional application: 95120642.4
(73) Proprietor: THE MORGAN CRUCIBLE COMPANY PLC, Windsor, Berkshire SL4 1EP (GB)
(72) Inventor: JUBB, Gary Anthony, Worcestershire DY13 0LS (GB)
(74) Representative: Boff, James Charles
(86) International application number: GB9400053
(87) International publication number: WO9415883

(56) References cited:
- EP-A- 0 459 897
- EP-B1- 0 076 677
- WO-A-87/05007
- WO-A-89/12032
- WO-A-90/02713
- WO-A-92/09536
- WO-A-93/15028
- GB-A- 1 399 556
- JP-A- 51 013 819
- JP-A- 51 043 429
- CHEMICAL ABSTRACTS, vol. 110, no. 10, 06 CHEMICAL ABSTRACTS, vol. 110, no. 10, 06 March 1989, Columbus, OH (US); p. 373, no. March 1989, Columbus, OH (US); p. 373, no. 81274g 81274g
- DATABASE WPI, Section Ch, Week 8218, DATABASE WPI, Section Ch, Week 8218, Derwent Publications Ltd., London (GB); AN Derwent Publications Ltd., London (GB); AN 82-36551e 82-36551e
- P. Dietrichs, W. Krönert; Eigenschaften, P. Dietrichs, W. Krönert; Eigenschaften, Hohtemperaturverhalten und Hohtemperaturverhalten und Eigensatzbedingungen keramischer Fasern, Eigensatzbedingungen keramischer Fasern, Gas Wärme International 30 (1981), p. 338 Gas Wärme International 30 (1981), p. 338
- D.E. Corlock; Keramische Fasern (Übersetzt D.E. Corlock; Keramische Fasern (Übersetzt aus Refract. J. 58(1983) 3, p. 17-20 aus Refract. J. 58(1983) 3, p. 17-20
- Keramische Zeitschrift, 33 Jahrgang Nr. 9, Keramische Zeitschrift, 33 Jahrgang Nr. 9, 1981, p. 516 1981, p. 516
- Extract from DIN V ENV 1094-7: 1993; p. Extract from DIN V ENV 1094-7: 1993; p. 9-12; "Bestimmung der bleibenden linearen 9-12; "Bestimmung der bleibenden linearen Längenänderung nach Temperatureinwirkung" Längenänderung nach Temperatureinwirkung"
- Article "Ofentechnik"; Stahl u. Eisen 110 Article "Ofentechnik"; Stahl u. Eisen 110 (1990), Nr. 6, p. 115 (1990), Nr. 6, p. 115
- Refractory materials-Methods for testing Refractory materials-Methods for testing insulating products made from ceramic insulating products made from ceramic fibres-41th PRE Recomendation 1977-Revision fibres-41th PRE Recomendation 1977-Revision 1989; p.1-16 1989; p.1-16

## Description

This invention relates to saline soluble, non-metallic, amorphous, inorganic oxide, refractory fibrous materials. The invention particularly relates to glassy fibres having silica as their principal constituent.

Inorganic fibrous materials are well known and widely used for many purposes (e.g. as thermal or acoustic insulation in bulk, mat, or blanket form, as vacuum formed shapes, as vacuum formed boards and papers, and as ropes yarns or textiles; as a reinforcing fibre for building materials; as a constituent of brake blocks for vehicles). In most of these applications the properties for which inorganic fibrous materials are used require resistance to heat. and often resistance to aggressive chemical environments.

Inorganic fibrous materials can be either glassy or crystalline. Asbestos is an inorganic fibrous material one form of which has been strongly implicated in respiratory disease.

It is still not clear what the causative mechanism is that relates some asbestos with disease but some researchers believe that the mechanism is mechanical and size related. Asbestos of a critical size can pierce cells in the body and so, through long and repeated cell injury, have a bad effect on health. Whether this mechanism is true or not regulatory agencies have indicated a desire to categorise any inorganic fibre product that has a respiratory fraction as hazardous, regardless of whether there is any evidence to support such categorisation. Unfortunately for many of the applications for which inorganic fibres are used. there are no realistic substitutes.

Accordingly there is a demand for inorganic fibres that will pose as little risk as possible (if any) and for which there are objective grounds to believe them safe.

A line of study has proposed that if inorganic fibres were made that were sufficiently soluble in physiological fluids that their residence time in the human body was short; then damage would not occur or at least be minimised. As the risk of asbestos linked disease appears to depend very much on the length of exposure this idea appears reasonable. Asbestos is extremely insoluble.

As intercellular fluid is saline in nature the importance of fibre solubility in saline solution, has long been recognised. If fibres are soluble in physiological saline solution then, provided the dissolved components are not toxic, the fibres should be safer than fibres which are not so soluble. The shorter the time a fibre is resident in the body the less damage it can do. H. Förster in 'The behaviour of mineral fibres in physiological solutions' (*Proceedings of 1982 WHO IARC Conference,* Copenhagen, Volume 2. pages 27-55(1988)) discussed the behaviour of commercially produced mineral fibres in physiological saline solutions. Fibres of widely varying solubility were discussed.

International Patent Application No. WO87/05007 disclosed that fibres comprising magnesia. silica. calcia and less than 10 wt% alumina are soluble in saline solution. The solubilities of the fibres disclosed were in terms of parts per million of silicon (extracted from the silica containing matenal of the fibre) present in a saline solution after 5 hours of exposure. The highest value revealed in the examples had a silicon level of 67 ppm. In contrast, and adjusted to the same regime of measurement, the highest level disclosed in the Förster paper was equivalent to approximately 1 ppm. Conversely if the highest value revealed in the International Patent Application was converted to the same measurement regime as the Förster paper it would have an extraction rate of 901.500 mg Si/kg fibre - i.e. some 69 times higher than any of the fibres Förster tested, and the fibres that had the highest extraction rate in the Förster test were glass fibres which had high alkali contents and so would have a low melting point. This is convincingly better performance even taking into account factors such as differences in test solutions and duration of experiment.

International Patent Application No. WO89/12032 disclosed additional fibres soluble in saline solution and discusses some of the constituents that may be present in such fibres. Among such constituents are ZrO₂ and this document claims (among other things) processes using fibres of composition (in weight %):- ZrO₂ 0.06-10%; SiO₂ 35-70%; MgO 0-50%; CaO 0-64.5%. However the patent actually discloses a much more limited range of zirconia containing materials and these are listed in Table 1 below ranked on silica content. None of the disclosed zirconia containing compositions were tested for shrinkage and hence usefulness in high temperature applications; all that these fibres were tested for was ability to withstand a fire test and Table 1 indicates that the results of this test were not very predictable; there does appear to be a trend with silica content but no trend is discernible with zirconia content.

European Patent Application No. 0399320 disclosed glass fibres having a high physiological solubility.

Further patent specifications disclosing seiection of fibres for their saline solubility are European 0412878 and 0459897. French 2662687 and 2662688. PCT WO86/04807 and WO90/02713.

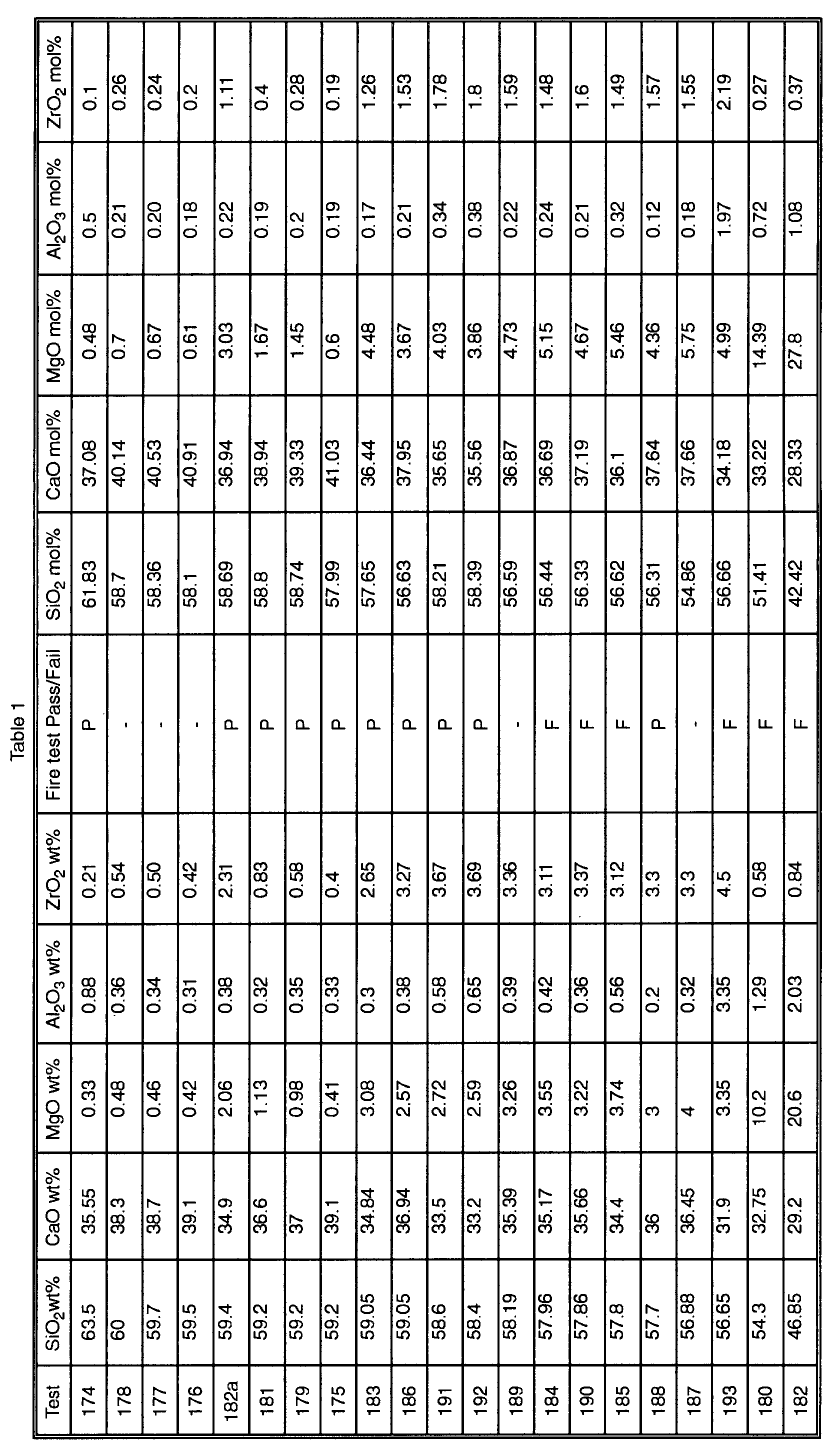

The refractoriness of the fibres disclosed in these various prior art documents varies considerably. The maximum service temperature of any of the above mentioned fibres (when used as refractory insulation) is up to 815°C (1500°F).

Among saline soluble commercial fibres usable at temperatures higher than 815°C are SUPERWOOL™ a fibre manufactured by The Morgan Crucible Company plc and which has a maximum use temperature of 1050°C and a composition of SiO₂ 65wt%; CaO 29wt%: MgO 5wt%; Al₂O₃ 1 wt%. A similar fibre is INSULFRAX™ a fibre made by Carborundum Company which has a continuous use limit of 1000°C (1832°F) and which melts at 1260°C (2300°F). This has a composition of SiO₂ 65wt%; CaO 31.1wt%; MgO 3.2wt%; Al₂O₃ 0.3wt% and Fe₂O₃ 0.3wt%.

Use of ZrO₂ as a constituent in aluminosilicate fibres to provide high temperature resistance is known (see European '0144349). However it is by no means apparent that this effect is transferable to saline soluble fibres and the disclosure of International Patent Application No. WO89/12032 discussed above would tend to suggest that it is not.

The applicant's earlier International Patent Application WO93/15028 (from which this application claims priority) disclosed saline soluble fibres usable at temperatures in excess of 1000°C but gave no indication that fibres could be used at still higher temperatures. The applicants have found that some of the fibres disclosed in WO93/15028 (e.g. fibre A2-13 from Table 9 of WO93/15028) are in fact usable at temperatures of up to 1260°C and even higher. In general the applicants have found that fibres of specified compositions (including zirconia containing fibres) are usable at temperatures up to and beyond 1260°C. The applicants have realised that failure of fibres at high temperature occurs primarily upon devitrification of the fibre; if on devitrification insufficient silica is left the fibres will fail through having a shrinkage of greater than 3.5%. Accordingly the applicants have looked to what materials are formed on devitrification.

In the following where reference is made to a saline soluble fibre this is to be taken as meaning a fibre having a total solubility of greater than 10ppm in saline solution as measured by the method described below, and preferably having much higher solubility.

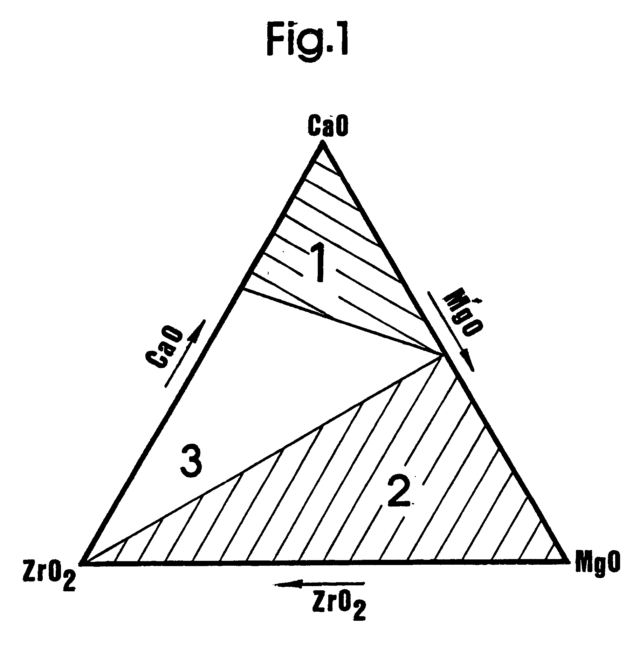

Figure 1 shows a three axis composition diagram for the constituents CaO. MgO, and ZrO₂; this diagram omits all other constituents so that the sum of CaO, MgO, and ZrO₂ at all points is 100%. Silica is in excess at all points as described below.

For fibres where CaO > MgO + 2ZrO₂ all of the MgO is bound as CaO.MgO.2SiO₂; all of the ZrO₂ is bound as 2CaO.ZrO₂.4SiO₂; and any excess CaO is bound as CaSiO₃. These fibres lie in region 1 of Figure 1 and in the following are referred to as excess CaO fibres.

For fibres where MgO > CaO all of the CaO is bound as CaO.MgO.2SiO₂; all of the ZrO₂ is bound as ZrO₂.SiO₂; and the excess MgO is bound as MgO.SiO₂. These fibres lie in region 2 of Figure 1 and in the following are referred to as excess MgO fibres.

For the fibres in region 3 of Figure 1 where CaO > MgO and CaO < MgO + 2ZrO₂, all of the MgO is bound as CaO.MgO.2SiO₂; the rest of the CaO is bound as 2CaO.ZrO₂.4SiO₂; and the excess ZrO₂ is bound as ZrO₂.SiO₂. These fibres are referred to in the following as excess ZrO₂ fibres.

The applicants have defined a term "SiO₂ excess" which indicates the amount of silica left once the above mentioned constituents (CaO, MgO, and ZrO₂) have crystallised. The value of SiO₂ excess is calculated by subtracting from the total quantity of silica present that amount that should crystallise as silicates with the other constituents CaO, MgO, and ZrO₂ assuming all of the CaO, MgO, and ZrO₂ crystallise as the materials mentioned above. In most of the compositions studied alumina is present to some extent and so the applicants also assume that alumina crystallises as Al₂O₃.SiO₂ and to calculate SiO₂ excess this quantity is subtracted also. Only the above named constituents are used in calculating the SiO₂ excess as other chemical constituents are present in only small amounts. For other chemical constituents similar considerations apply. It has been found by the applicants that when the SiO₂ excess is greater than 21.8mol% the fibres tend to have a resistance to temperature of up to 1260°C

The applicants have found that for the excess CaO compositions the situation is complicated by a eutectic formed between the two crystalline materials diopside (CaO.MgO.2SiO2) and wollastonite (CasiO₃) that has a damaging effect on high temperature resistance. Thus the present invention excludes excess CaO compositions

The physical basis for the importance of SiO₂ excess may be that it indicates how much silica is left to maintain a glassy phase on crystallisation of the other constituents as silicate materials. Further, the silicate materials that form on devitrification may become liquid or flow at 1260°C so causing shrinkage.

The quantity of potentially fluxing constituents such as alkali metals and other incidental impurities (e.g. iron oxides) should be kept low.

Accordingly the present invention provides use as insulation for applications requiring resistance to a temperature of 1260°C of a saline soluble refractory fibre for which a vacuum cast preform of the fibre using 75g of fibre in 500 cm³ of 0.2% starch solution into a 120x65mm tool has a shrinkage of 3.5% or less, as measured by the method of the description, when exposed to 1260°C for 24 hours and comprising CaO, SiO₂, MgO, optionally ZrO₂, optionally less than 0.75mol% Al₂O₃, any incidental impurities amounting to less than 2mol% in total of which TiO₂ is less than 1.25 mol %, in which the amount of CaO is less than the sum of the amount of MgO and twice the amount of ZrO₂ and in which the SiO₂ excess (defined as the amount of SiO₂ calculated as remaining after the above named constituents are crystallised as silicates) exceeds 21.8mol%.

The applicants have also found that for those fibres that have a satisfactory shrinkage at 1260° C the saline solubility of the fibres produced appears to increase with increasing amount of MgO present whereas ZrO₂ and Al₂O₃ are detrimental to solubility. The invention therefore also provides preferred saline soluble fibres of the composition specified above and in which the MgO excess [defined as MgO - (ZrO₂ + Al₂O₃)] is greater than 10mol%, such fibres tending to have a total solubility of MgO + SiO₂ + CaO of greater than 50ppm (see below for measurement details). More preferably the MgO excess is greater than 11.2mol% such fibres tending to have extremely high solubility of about 100ppm or more. Yet more advantageously, so far as solubility is concerned, the MgO excess is greater than 15.25mol%; all of the fibres measured having an MgO excess greater than 15.25mol% had solubilities in excess of 100ppm.

The applicants have investigated, for their saline solubility and refractoriness, a range of compositions based on CaO/MgO/SiO₂ fibres with additional constituents Al₂O₃, ZrO₂, and TiO₂. These fibres were formed by blowing the molten constituents from a melt stream in a conventional manner but the invention is not limited to blown fibres and also encompasses fibres formed by spinning or any other means.

Tables 2 & 3 show the results of these tests. Table 2 indicates for each the linear shrinkages at 800, 1000, 1200, and 1260°C (not all samples measured at every temperature); weight percent composition; mole percent composition (based on the constituents CaO, MgO, SiO₂ Al₂O₃, ZrO₂, and TiO₂); SiO₂ excess (as defined above) and, for the CaO excess fibres, a calculated diopside to wollastonite ratio (not relevant to the present invention). Table 3 indicates for each the weight percent composition; mole percent composition (based on the constituents CaO, MgO, SiO₂ Al₂O₃, ZrO₂, and TiO₂); solubilities of various constituents; and MgO excess (as defined above) Each sample that has a satisfactory shrinkage of 3.5% or less at 1260°C is indicated by a composition shown in bold. Those compositions that fail to meet the shrinkage criterion are indicated in italics. Other compositions are shown falling within the described ranges but for which the high temperature shrinkage was not measured; these compositions are indicated in plain text. Those compositions where a fibre could not be made or where the fibre was of too poor a quality for the solubility to be measured are indicated with X's.

A pattern emerges which is described below with reference to Table 2.

The fibres above and including line A all have a SiO₂ excess of less than 21.8mol% and all (where measured) fail the shrinkage criterion that a vacuum cast preform of the fibre has a shrinkage of less than 3.5% when exposed to 1260°C for 24 hours.

The fibres above and including line B and below line A all have a TiO₂ content of greater than 1.25mol% and all fail the shrinkage criterion.

The fibres above and including line C and below line B all have a Al₂O₃ content of greater than 0.75mol% and all fail the shrinkage criterion.

The fibres below line C are grouped according to their relative amounts of CaO, MgO, and ZrO₂ (i.e. as to their positions in Figure 1)

The fibres above and including line D and below line C are the excess MgO fibres (region 2 of Figure 1) and are sorted on SiO₂ excess.

The fibres above and including line E and below line D are the excess ZrO₂ fibres (region 3 of Figure 1) and are sorted on SiO₂ excess.

The fibres below line E are the excess CaO fibres and do not form part of this invention.

Looking first to the excess MgO fibres most pass the shrinkage criterion at 1260°C (where tested). B7D, BZ-440C, B7C, and BZ-4150C all contain relatively high levels of Fe₂O₃ (1.1 wt% for B7D and 0.6wt% for the others).

D3 and D8 contain relatively high levels (0.71mol% and 0.74 mol%) of TiO₂ and it may be that this, in combination with other impurities, has led to failure. It should be noted that D9 has 0.65mol% TiO₂ and has a satisfactory shrinkage.

BZ-440A, B7A, BZ-4150A, and BZ-560B have varying amounts of Na₂O present (0.3-1.0wt%) and this may contribute to their failure.

BZ-4150B has a Al₂O₃ content of 0.64mol% and fails the shrinkage criterion. This should be contrasted with BZ-4150 which has a similar composition but with only 0.06mol% Al₂O₃ and which passes the shrinkage criterion. In further contract BZ-560E has an alumina content of 0.62mol% and passes the shrinkage criterion; this composition has a much higher ZrO₂ content than BZ-4150B and the applicant believe that the presence of ZrO₂ allows the fibres to tolerate much higher levels of impurities than would otherwise be the case.

D3 only just fails with a shrinkage of 3.8% and B19 only has a shrinkage of 3.6% at 1260°C and both may in fact be errors in measurement.

Looking next to the excess ZrO₂ fibres all apart from BZ-407, BZ-429 and BZ-430 pass the shrinkage criteria at 1260°C (where tested). These results may indicate that the incidental impurities (shown as "Others" in Table 2) are having an effect as BZ-429 and BZ-430 show high levels of impurities (1.1 and 0.9 wt% respectively) that on analysis included 0.4 and 0.3 wt% respectively of Na₂O. BZ-430 only just failed the shrinkage criterion (3.7% shrinkage) and this may be due to error in measurement.

Table 3 shows the solubilities of the fibres shown in Table 2 but ranked on MgO excess. Although by no means exact it can be seen that there is a trend in total solubility that closely follows MgO excess.

In any event the trend appears to be that excess CaO fibres perform poorly (perhaps due to the formation of CaSiO₃ which is not formed in excess MgO or excess ZrO₂ fibres) whereas excess MgO and excess ZrO₂ fibres perform better. Taken to the extreme this would indicate that a high MgO, low CaO, low ZrO₂, low Al₂O₃ fibre would have very high solubility and low shrinkage. However the applicant's experience is that such fibres are difficult to form (see Compositions A2-33, A2-32, A2-28). Equally fibres that are too high in SiO₂ are difficult or impossible to form. The exact boundaries are difficult to ascertain and this invention only encompasses fibres that meet the above stated shrinkage requirements.

The applicants have tested some fibres to higher temperatures.

Fibres BZ-400, BZ-440, BZ-48, and BZ-54 were tested to 1350°C and all failed having shrinkages in excess of 20%.

Fibres BZ-400, BZ-36, BZ-46, and BZ-61 were tested to 1300°C and had shrinkages, respectively, of 6.2%, 17.9%, 19.6%, and 3.1%. BZ-61 is in the excess MgO region and the applicants surmise (since 2CaO.ZrO₂.4SiO₂ is not formed in this region) that it is this constituent that causes failure at 1300°C.

The fact that fibre shrinkage is so dependent on temperature (the fibres failing over such short temperature ranges as 1260°C to 1300°C and 1300°C to 1350°C) is a clue as to how experimental errors may arise. In a typical experimental furnace running at a nominal 1260°C temperatures can easily range from 1250°C to 1270°C both physically (from front to back or centre to wall of furnace) and in time (as the furnace controller supplies or stops current to the furnace). A 20°C temperature difference could easily move a sample from a temperature at which it passes to one at which it fails the 3.5% shrinkage criterion. As mentioned above this may explain the shrinkages of just over 3.5% found for compositions B19, D3, and BZ-430.

The following describes in detail the methods used to measure shrinkage and solubility.

Shrinkage was measured by proposed ISO standard ISO/TC33/SC2/N220 (equivalent to British Standard BS 1920, part 6,1986) with some modifications to account for small sample size. The method in summary comprises the manufacture of vacuum cast preforms, using 75g of fibre in 500cm³ of 0.2% starch solution, into a 120 x 65mm tool. Platinum pins (approximately 0.1 -0.3mm diameter) were placed 100 x 45mm apart in the 4 comers. The longest lengths (L1 & L2) and the diagonals (L3 & L4) were measured to an accuracy of ±5µm using a travelling microscope. The samples were placed in a furnace and ramped to a temperature 50°C below the test temperature at 400°C/hour and ramped at 120°C/hour for the last 50°C to test temperature and left for 24 hours. The shrinkage values are given as an average of the 4 measurements.

It should be noted that although this is a standard way of measuring shrinkage of fibre it has an inherent variability in that the finished density of the preform may vary depending on casting conditions. Further it should be noted that fibre blanket will usually have a higher shrinkage than a preform made of the same fibre. Accordingly the 3.5% figure mentioned in this specification is likely to translate as a higher shrinkage in finished blanket.

The applicants have looked to the various incidental impurities that can occur in inorganic oxide refractory fibres (e.g. alkali oxides and iron oxide) and have found that the impurity levels that can be tolerated vary according to the proportions of the main constituents of the fibre. Fibres containing high levels of ZrO₂ for example can tolerate higher levels of Na₂O or Fe₂O₃ than fibres with low levels of ZrO₂. Accordingly the applicants propose a maximum level of incidental impurities of 2mol%, the maximum level that will be tolerable will however vary as mentioned above.

Solubility was measured by the following method.

The fibre was first chopped - 2.5 g of fibre (deshotted by hand) was liquidised with 250 cm³ of distilled water in a domestic Moulinex (Trade Mark) food blender for 20 seconds. The suspension was then transferred to a 500 cm³ plastic beaker and allowed to settle after which as much liquid as possible was decanted and the remaining liquid removed by drying in an oven at 110°C.

The solubility test apparatus comprised a shaking incubator water bath, and the test solution had the following composition:-

| Compound | Name | Grams |
|---|---|---|
| NaCI | Sodium chloride | 6.780 |
| NH₄Cl | Ammonium chloride | 0.540 |
| NaHCO₃ | Sodium bicarbonate | 2.270 |
| Na₂HPO₄.H₂O | Disodium hydrogen phosphate | 0.170 |
| Na₃C₆H₅O₇2H₂O | Sodium citrate dihydrate | 0.060 |
| H₂NCH₂CO₂H | Glycine | 0.450 |
| H₂SO₄ s.g. 1.84 | Sulphuric acid | 0.050 |

The above materials were diluted to 1 litre with distilled water to form a physiological-like saline solution.

0.500 grams ± 0.0003 grams of chopped fibre was weighed into a plastic centrifuge tube and 25 cm³ of the above saline solution added. The fibre and saline solution was shaken well and inserted into the shaking incubator water bath maintained at body temperature (37°C = 1°C). The shaker speed was set at 20 cycles/minute.

After the desired period (usually 5 hours or 24 hours) the centrifuge tube was removed and centrifuged at 4500 revs/minute for approximately 5 minutes. Supernatant liquid was then drawn off using a syringe and hypodermic needle. The needle was then removed from the syringe, air expelled from the syringe. and the liquid passed through a filter (0.45 micron cellulose nitrate membrane filter paper [WCN type from Whatman Labsales Limited]) into a clean plastic bottle. The liquid was then analysed by atomic absorption using a Thermo Jarrell Ash Smith - Hiefje II machine.

The operating conditions were as follows using a nitrous oxide and acetylene flame:-

| WAVELENGTH BAND | | | CURRENT_ | |
|---|---|---|---|---|
| ELEMENT | (nm) | WIDTH | (mA) | FLAME |
| Al | 309.3 | 1.0 | 8 | Fuel Rich |
| SiO₂ | 251.6 | 0.3 | 12 | Fuel Rich |
| CaO | 422.7 | 1.0 | 7 | Fuel Lean |
| MgO | 285.2 | 1.0 | 3 | Fuel Lean |

The procedure and standards adopted for determining the above elements were as set out below.

SiO₂ can be determined without dilution up to 250 ppm concentration (1 ppm 1mg/Litre). Above this concentration an appropriate dilution was made volumetrically. A 0.1% KCI solution (0.1 g in 100 cm³) was added to the final dilution to prevent ionic interference. NB If glass apparatus is used, prompt analysis is necessary.

From a stock solution of 1000 ppm pure ignited silica (99.999%) (fused with Na₂CO₃ at 1200°C for 20 minutes in a platinum crucible (0.2500g SiO₂/2g Na₂CO₃) and dissolved in dilute hydrochloric acid (4 molar) made up to 250cm³ with distilled water in a plastic volumetric flask) the following standards were produced: -

| STANDARD (ppm SiO₂) | STOCK SOLUTION (cm³) |
|---|---|
| 10.0 | 1.0 |
| 20.0 | 2.0 |
| 30.0 | 3.0 |
| 50.0 | 5.0 |
| 100.0 | 10.0 |
| 250.0 | 25.0 |

Add 0.1% KCI to each standard before making to 100cm³.

Aluminium may be measured directly from the sample without dilution. Standards of 1.0, 5.0 and 10.0 ppm Al may be used. For calibration readings are multiplied by 1.8895 to convert from Al to Al₂O₃.

A standard Al atomic absorption solution (e.g. BDH 1000 ppm Al) was bought and diluted using an accurate pipette to the desired concentration. 0.1% KCI was added to prevent ionic interference.

Calcium may require dilutions on the sample before determination can be carried out (i.e. x 10 and x 20 dilutions). Dilutions must contain 0.1% KCI.

A standard Ca atomic absorption solution (e.g. BDH 1000 ppm Ca) was diluted with distilled water and an accurate pipette to give standards of 0.5. 4.0 and 10.0 ppm. 0.1% KCI is added to prevent ionic interference. To convert readings obtained from Ca to CaO a factor of 1.4 was used.

Magnesium may require dilutions on the sample before determinations can be made (i.e. x 10 and x 20). Aud 0.1% KCI to each dilution. To convert Mg to MgO multiply by 1.658.

A standard Mg atomic absorption solution (e.g. BDH 1000 ppm Mg) was diluted with distilled water and an accurate pipette to give standards of 0.5. 1.0 and 10.0 ppm Mg. 0.1% KCI was added to prevent ionic interference.

All stock solutions were stored in plastic bottles.

The above has discussed resistance to shrinkage of preforms exposed to 1260°C for 24 hours. This is an indication of the maximum use temperature of a fibre. In practice fibres are quoted for a maximum continuous use temperature and a higher maximum exposure temperature. It is usual in industry when selecting a fibre for use at a given temperature to choose a fibre having a higher continuous use temperature than that nominally required for the intended use. This is so that any accidental increase in temperature does not damage the fibres. It is quite usual for a margin of 100 to 150°C to be given. Accordingly this invention extends to use of the claimed fibres at elevated temperatures (i.e. at temperatures where the refractoriness of fibres is important) and not just to use at 1260°C.

In selecting a fibre a balance has to be struck between refractoriness of the fibre and saline solubility of the fibre. For example the applicants have found the best high solubility fibre (total solubility greater than 100ppm) is probably composition B7 as that has a shrinkage of 2.7% at 1260°C. In contrast the best refractory fibre is probably BZ-560 which has a shrinkage of only 2. 1% at 1260°C but has a total solubility of only 27ppm.. Although there are other fibres with a lower shrinkage this fibre also has the property of retaining in large part its resilience on firing to 1260°C - many of the fibres become rigid after firing due to crystallisation and sintering. It appears that high levels of ZrO₂ help to overcome this (BZ-560 has 7.64mol% ZrO₂) but at the same time reduce solubility.

It will be evident from the above that incidental impurity levels are preferably kept as low as possible. The applicants surmise that as the various crystalline materials crystallise from the fibres impurities migrate to the grain boundaries and concentrate there. Thus a small impurity can have a very large effect.

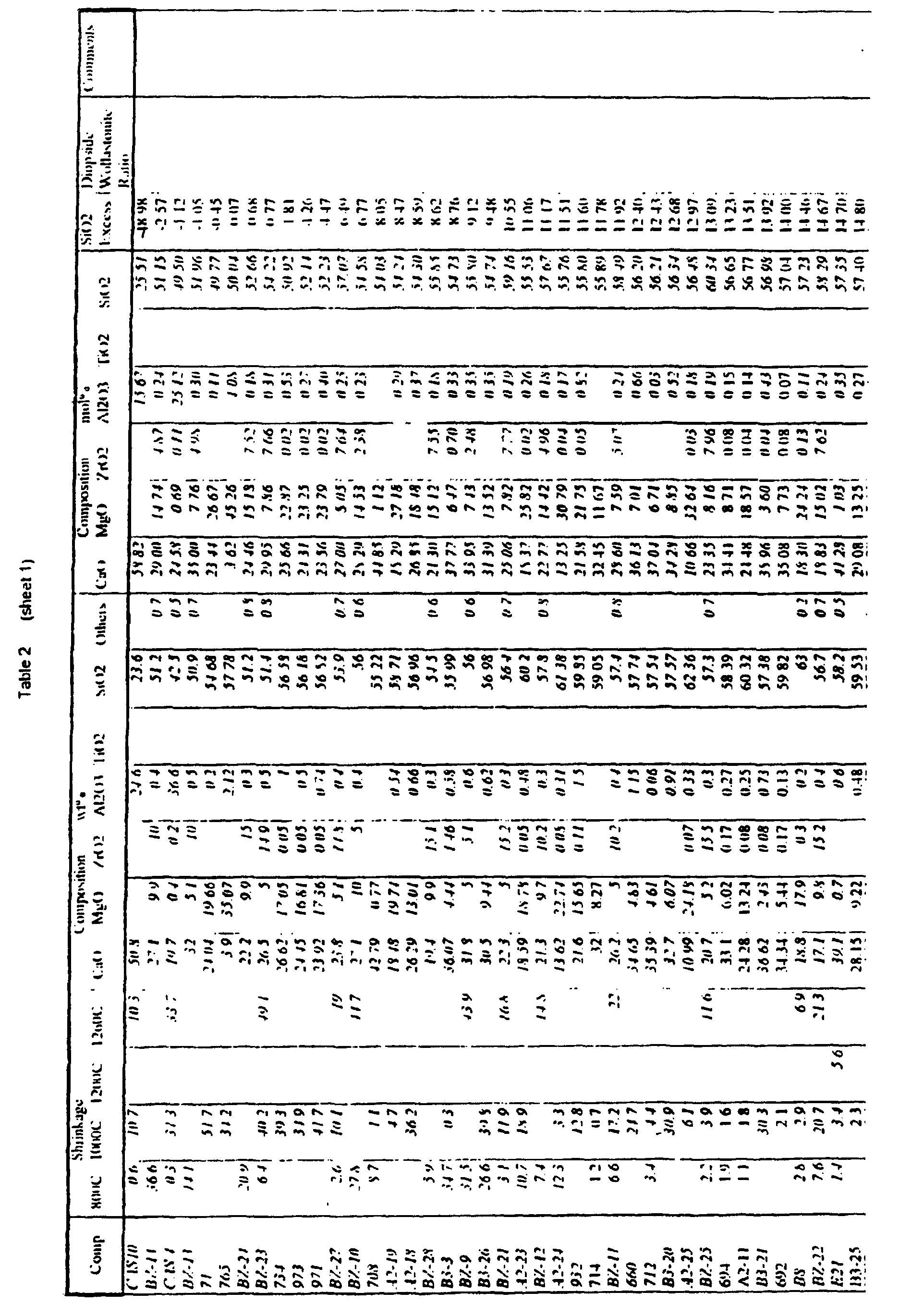

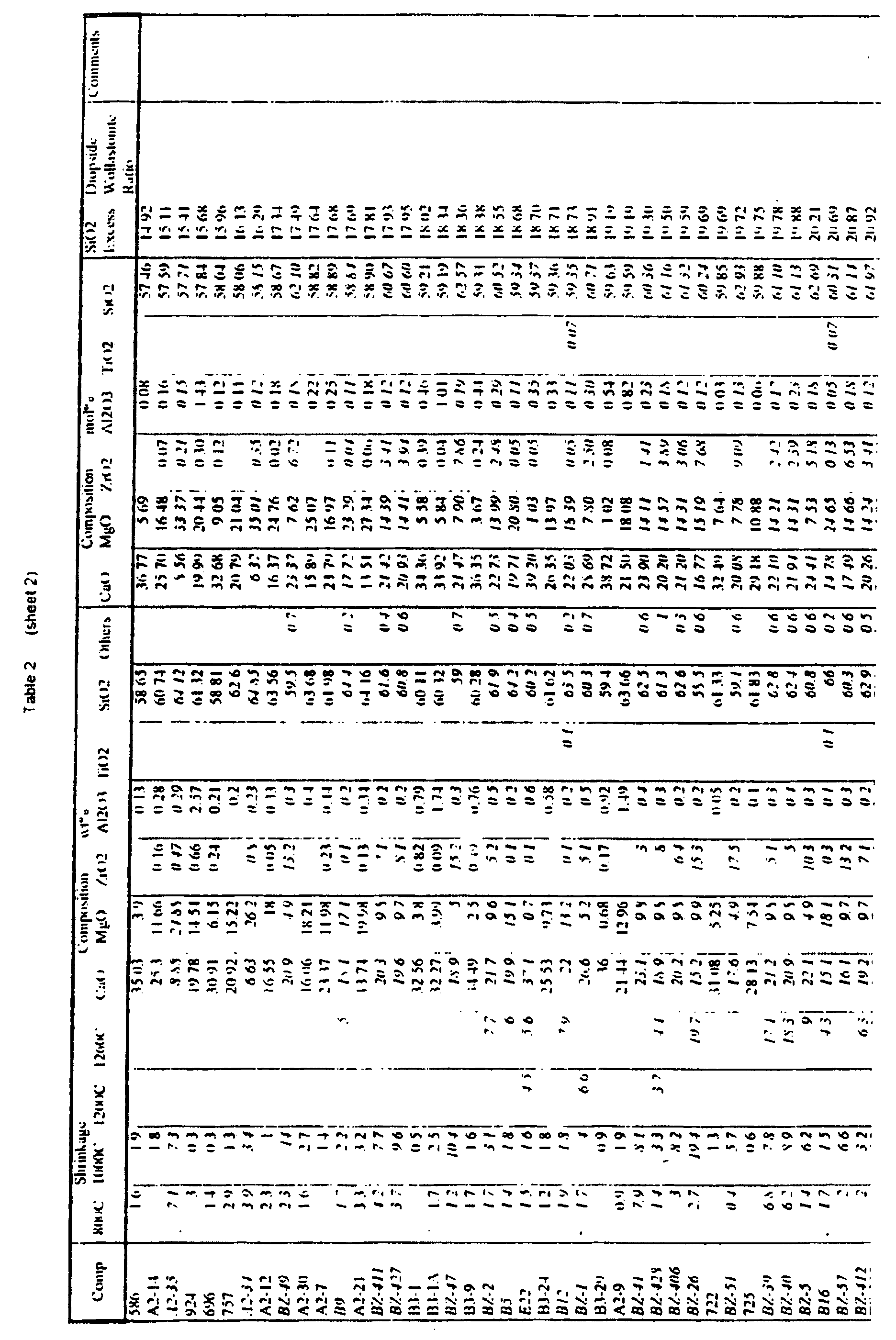

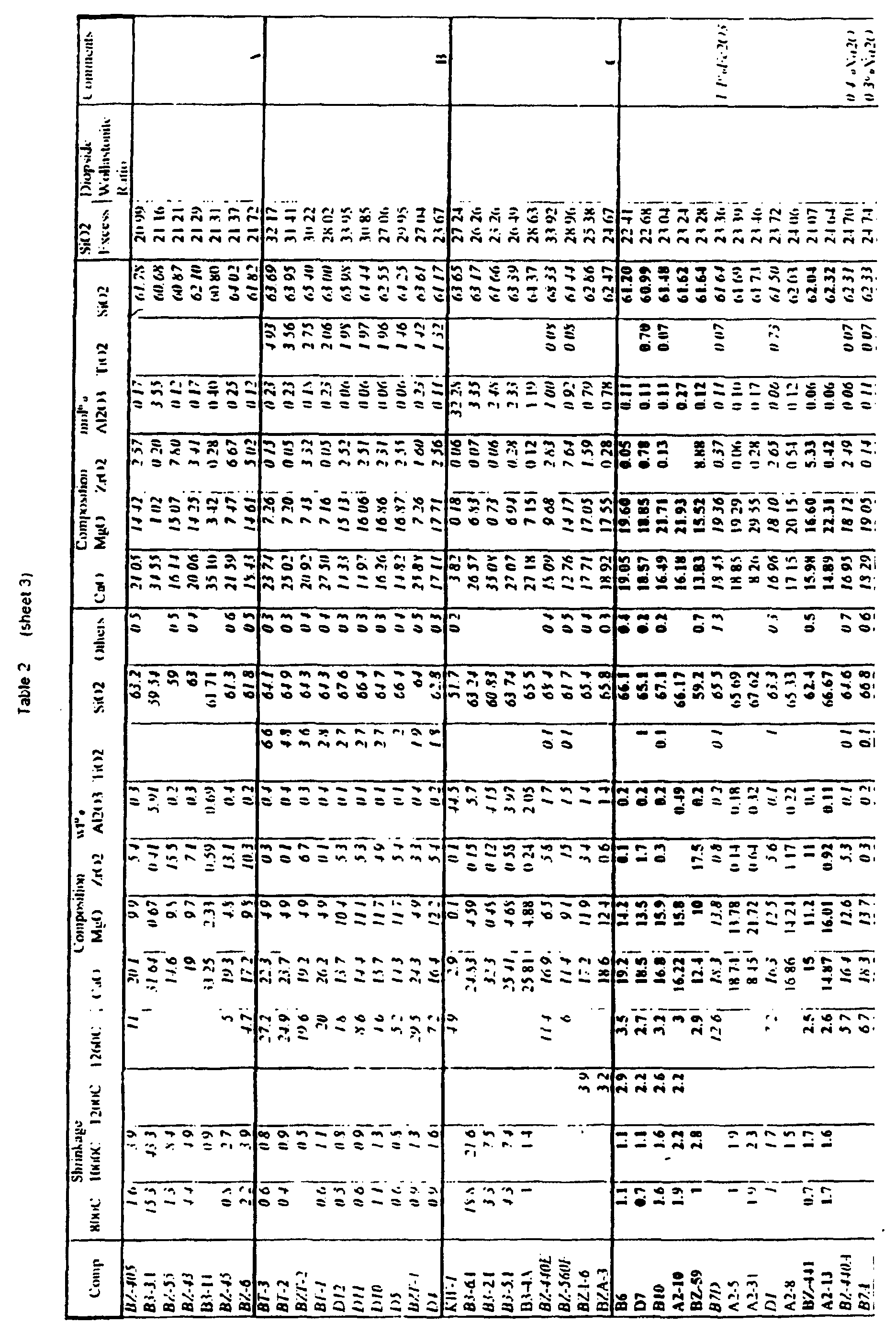

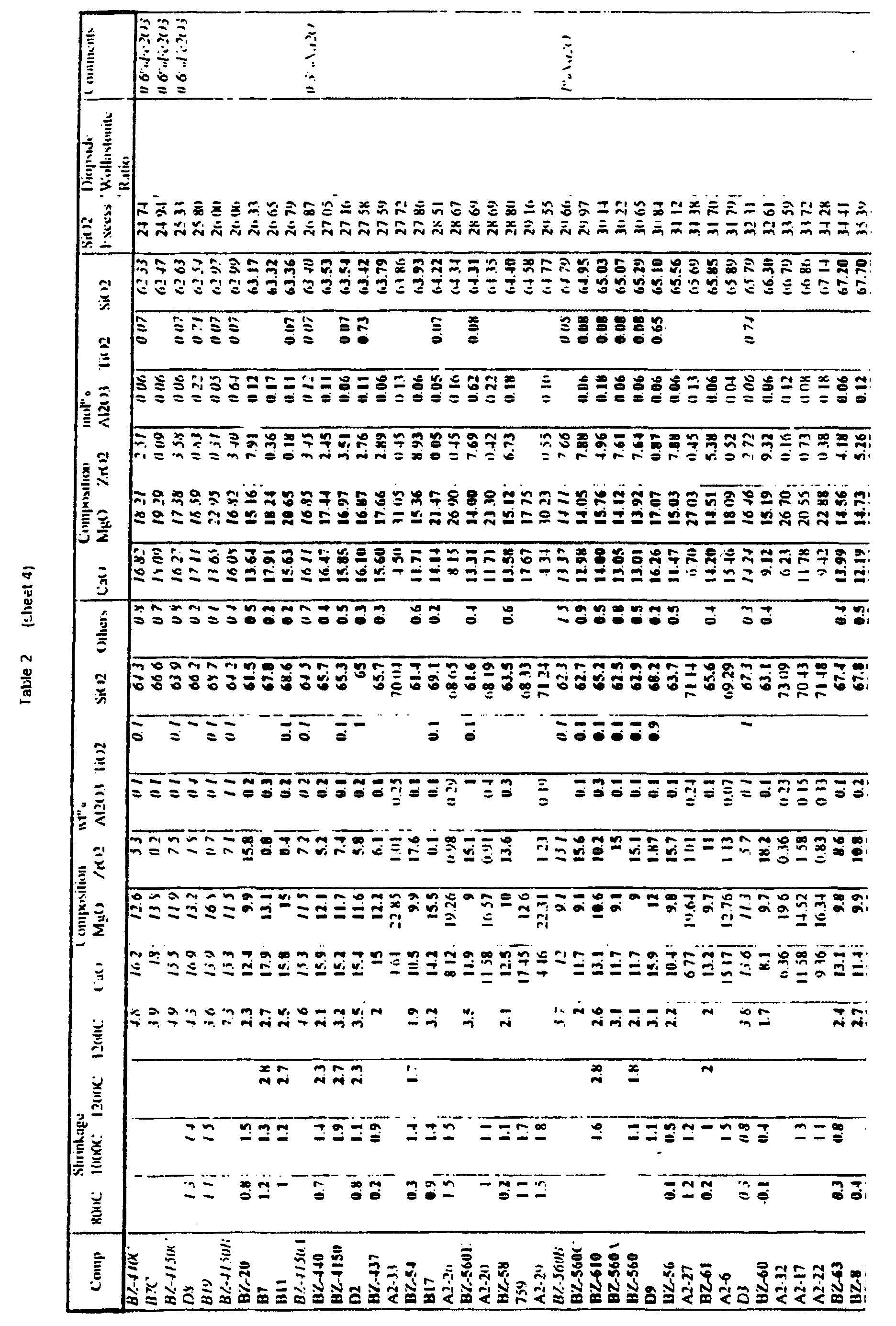

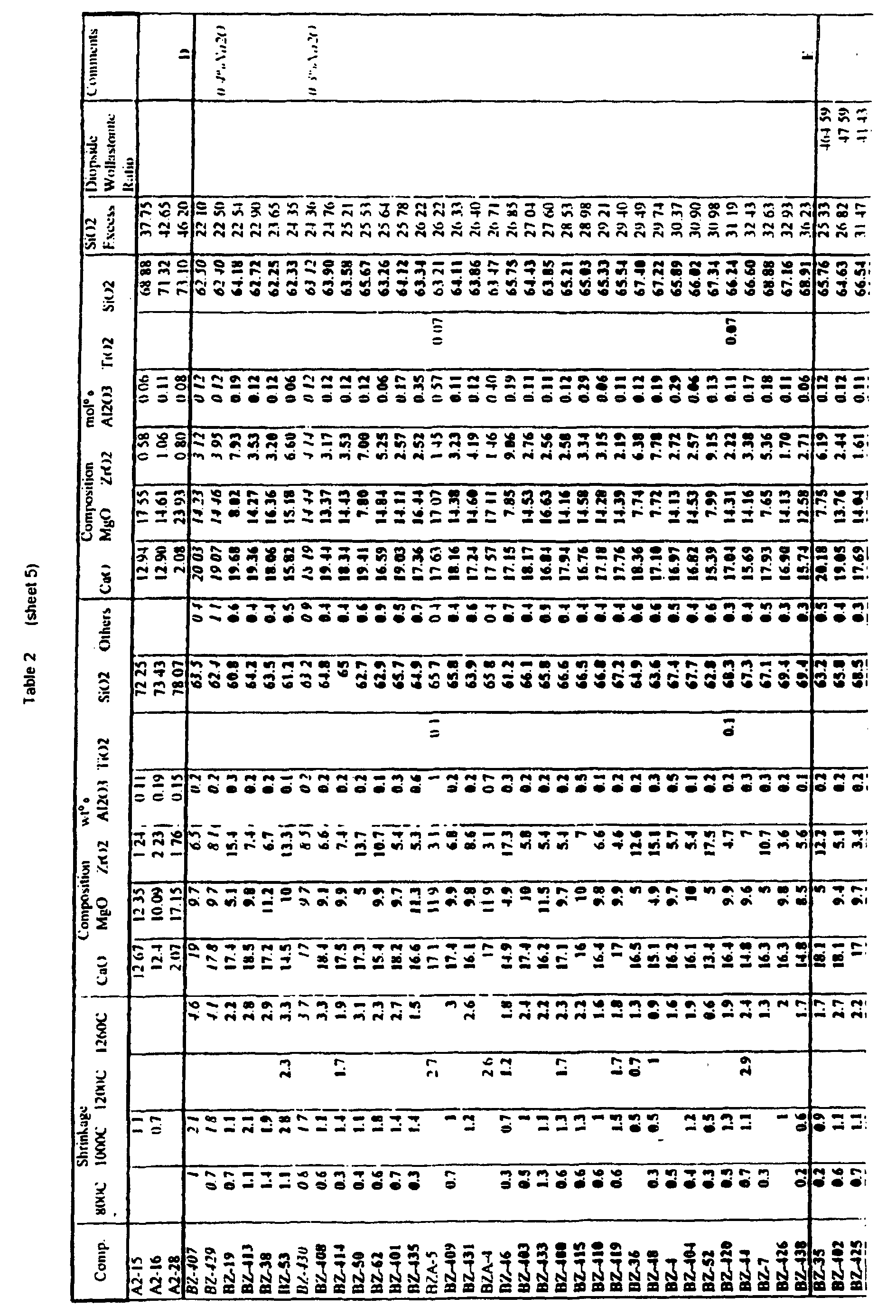

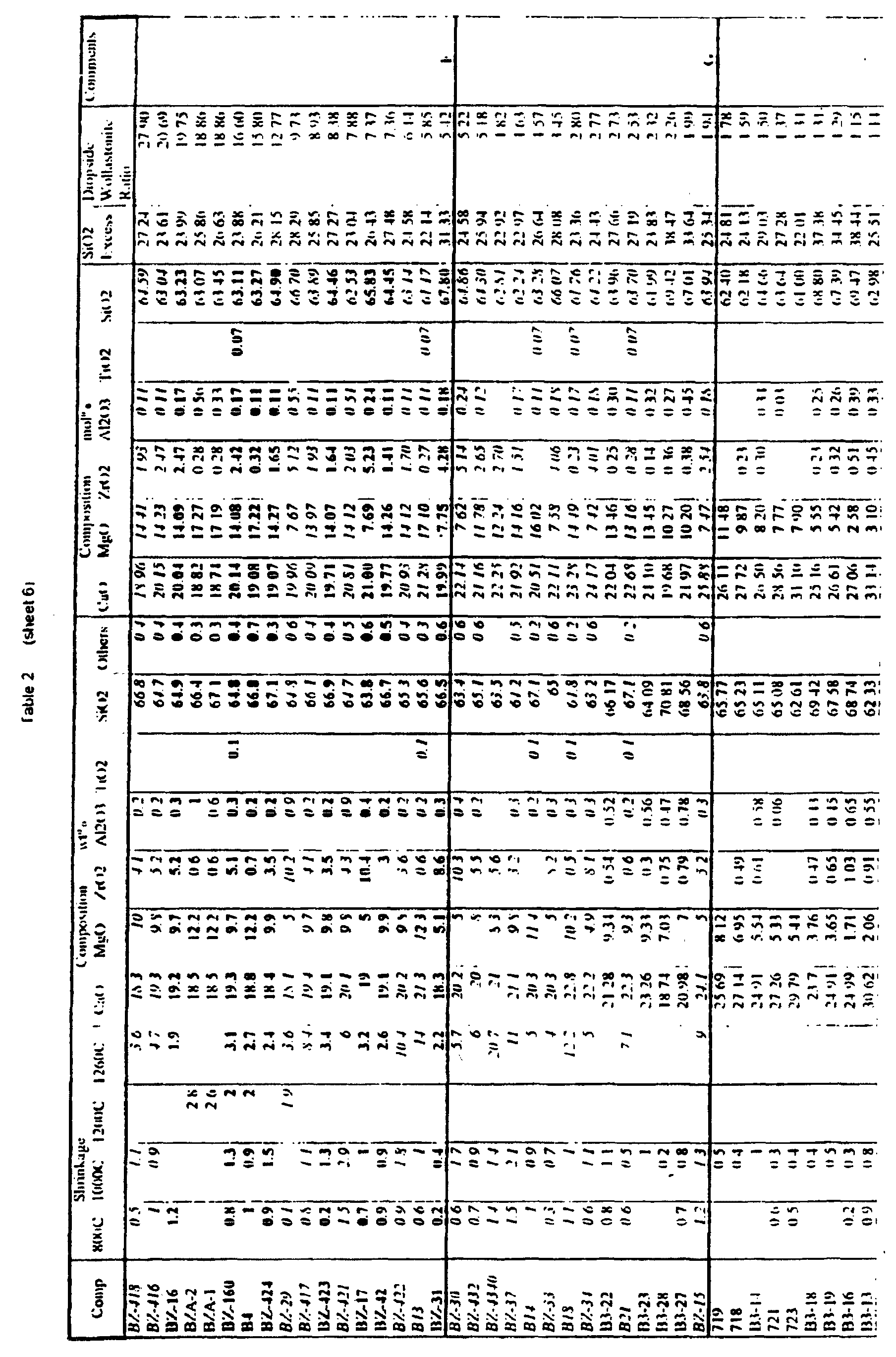

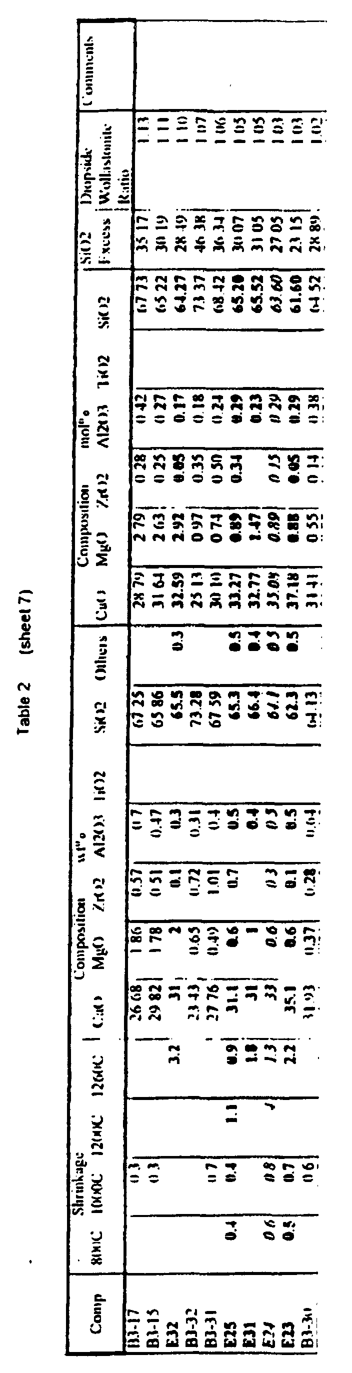

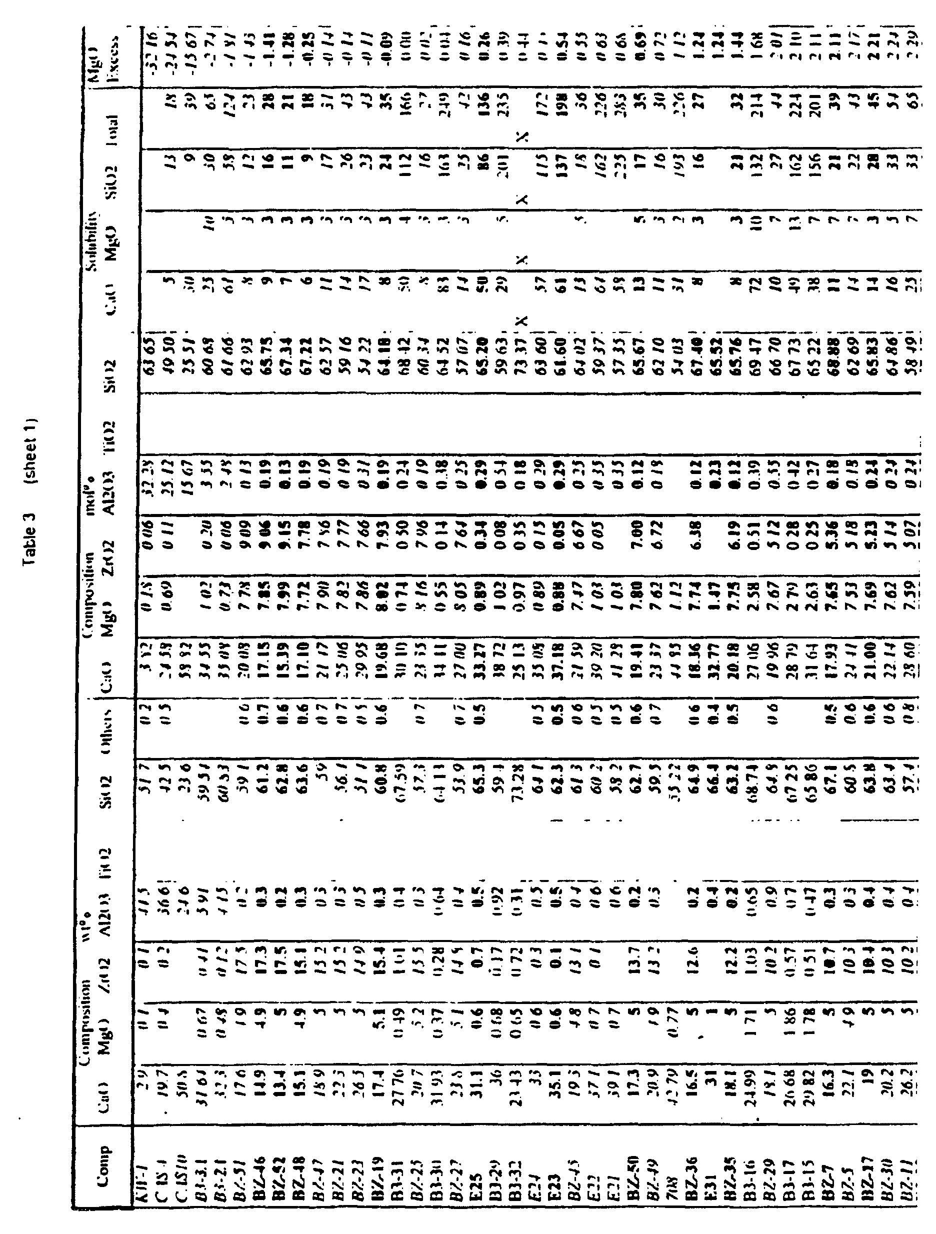

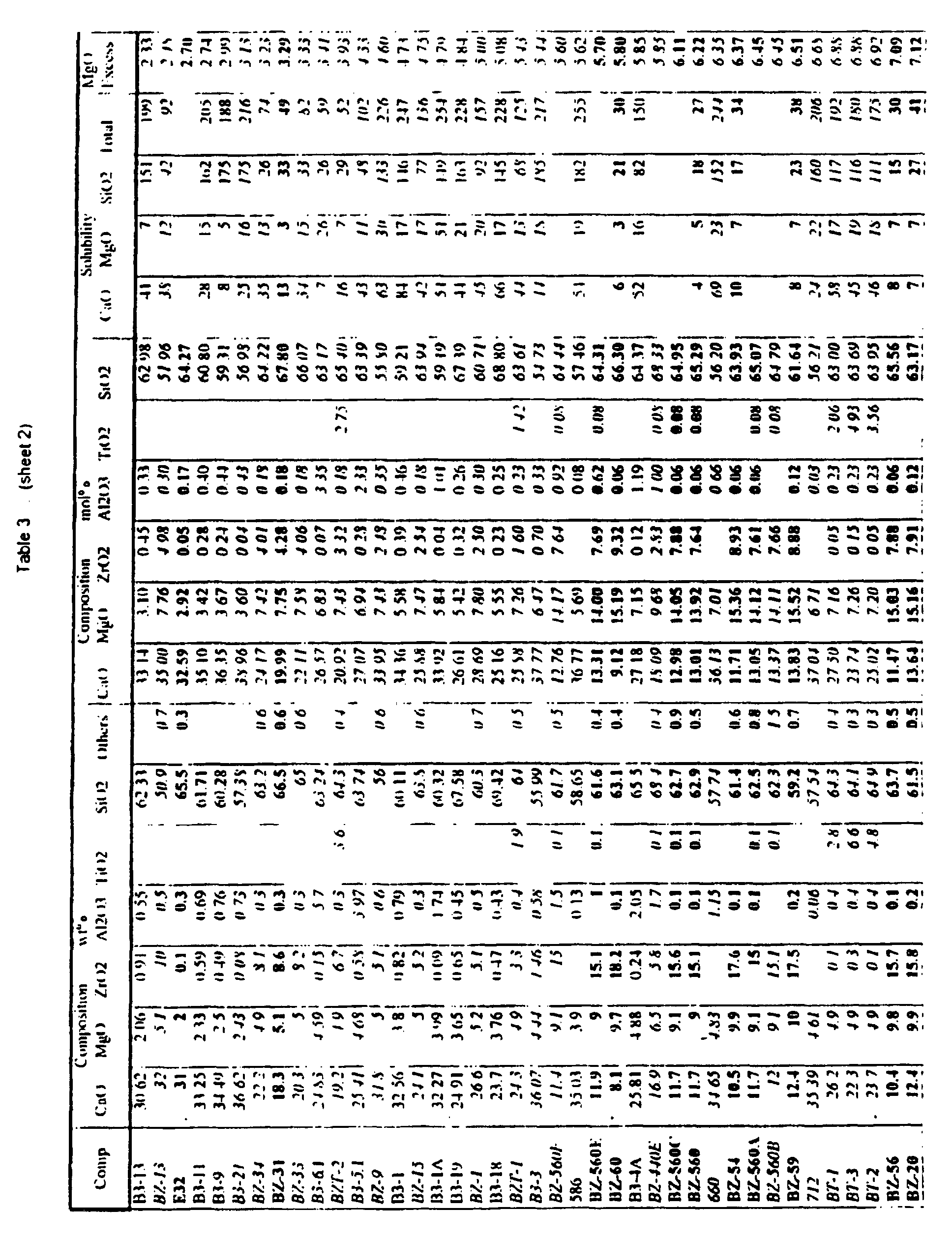

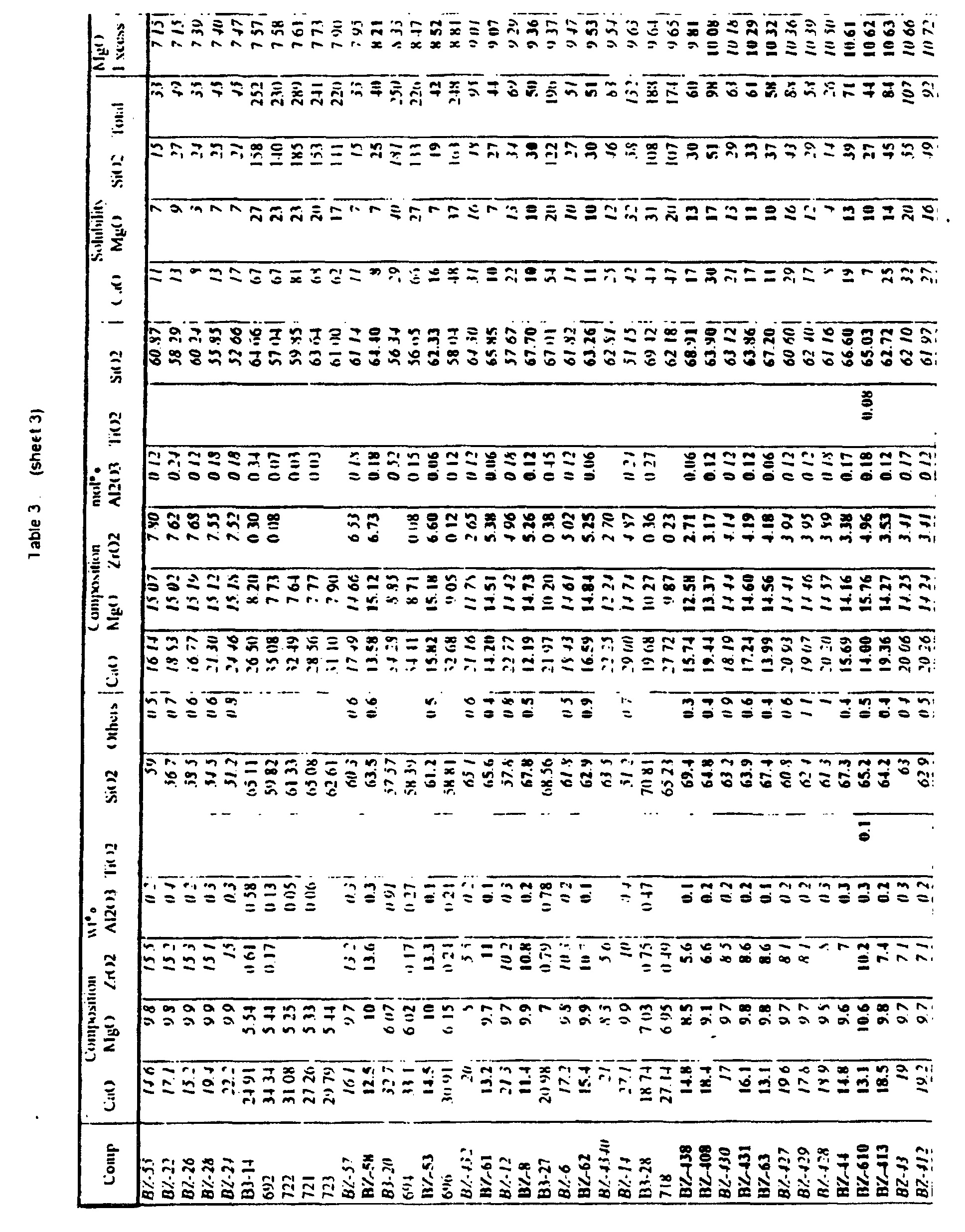

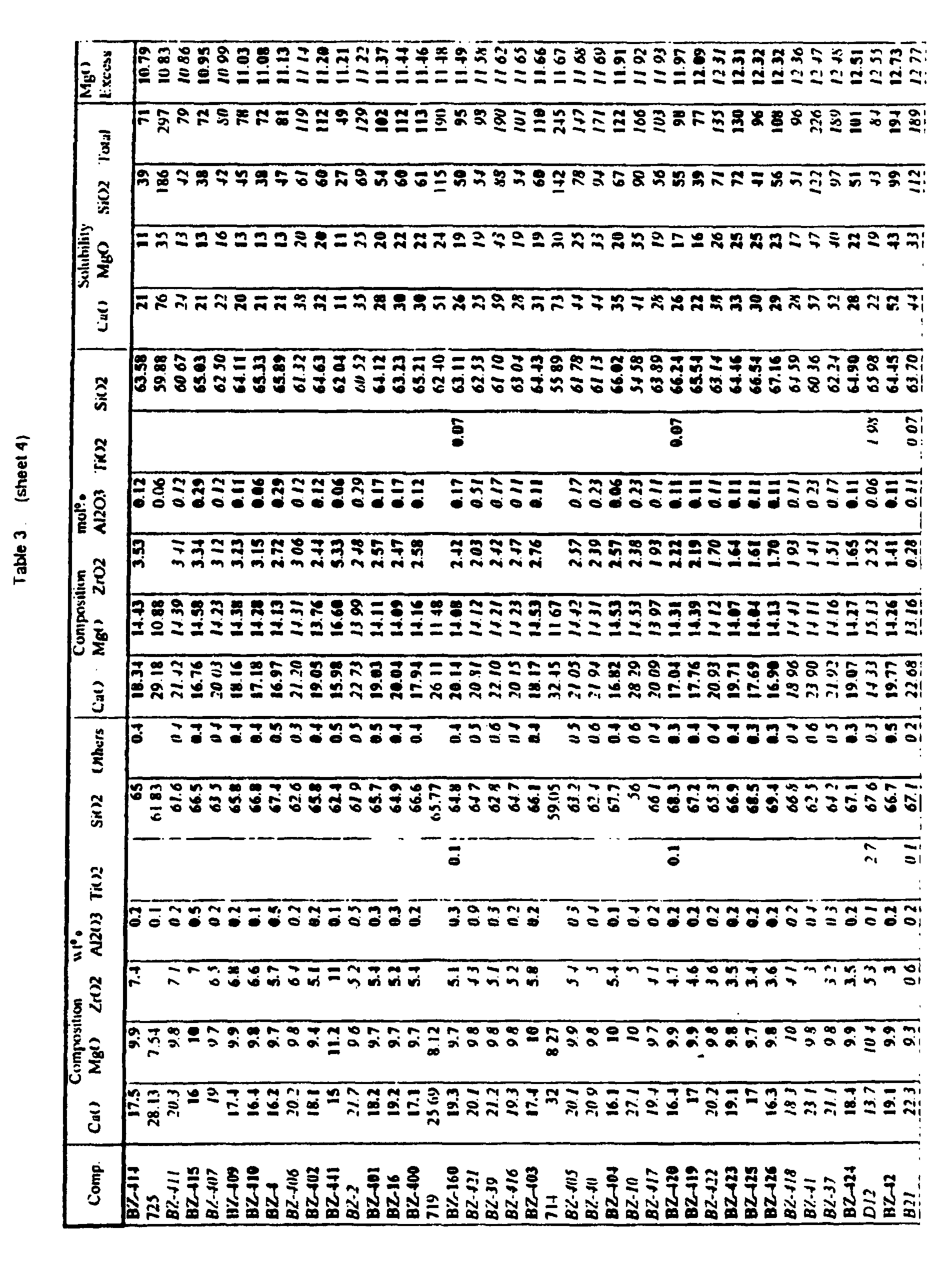

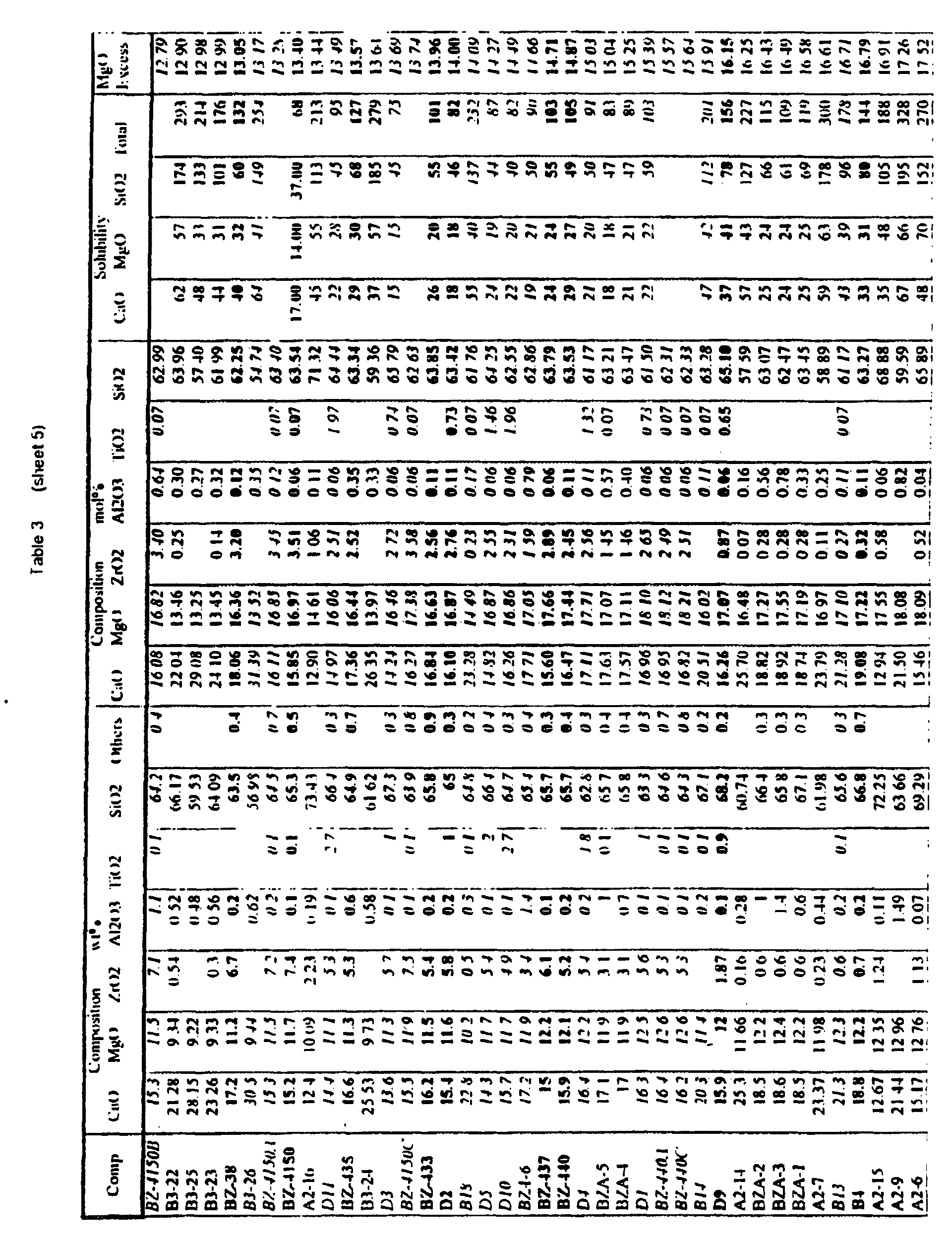

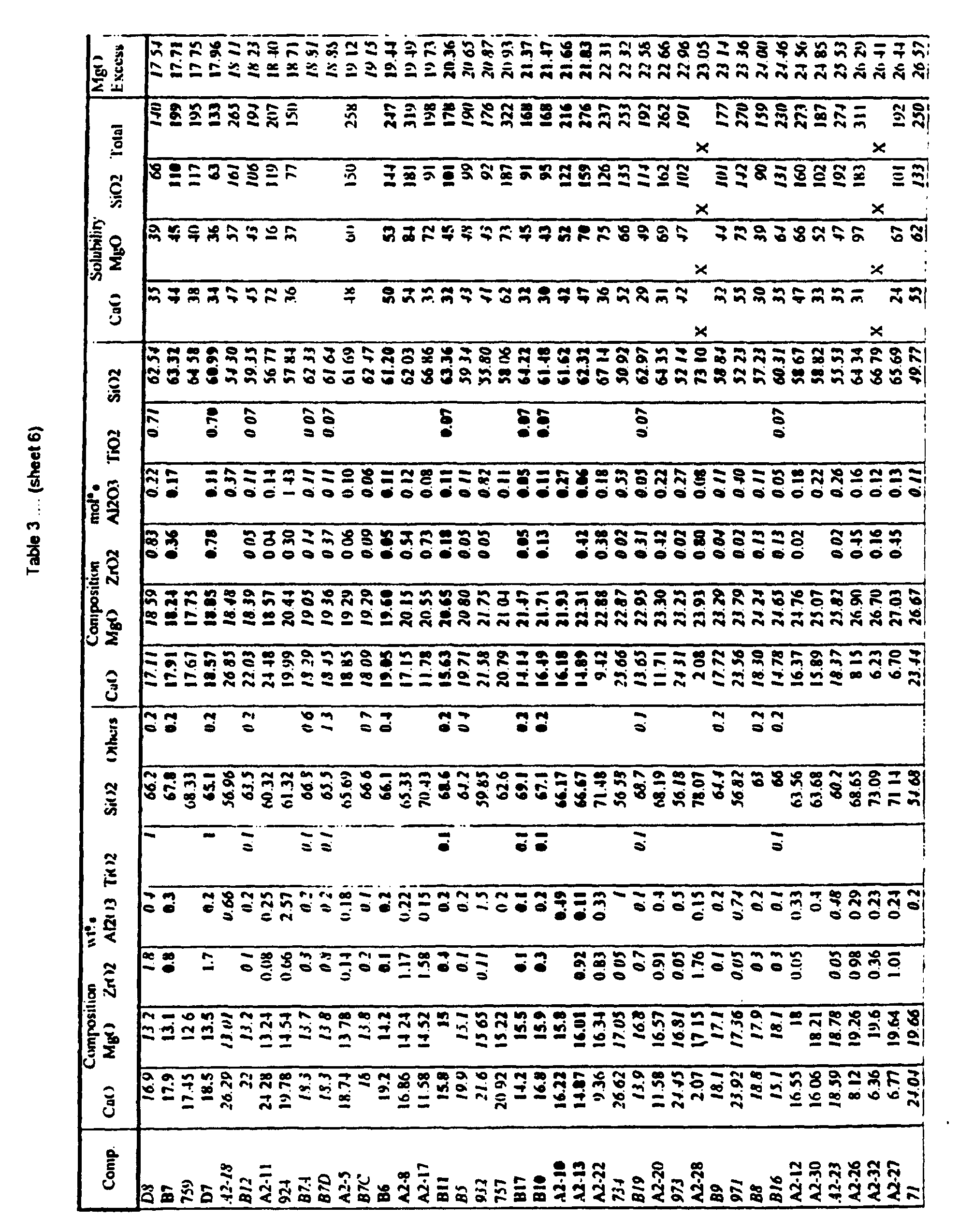

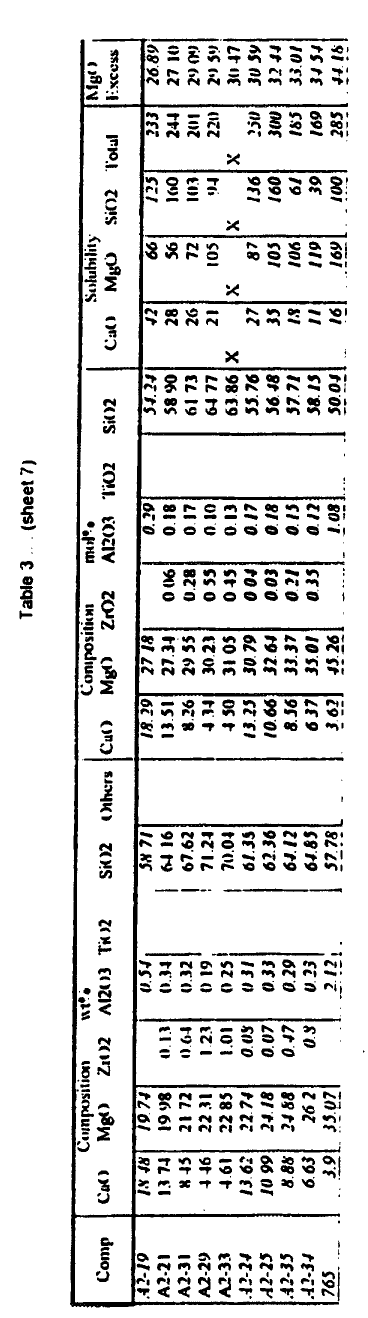

## Claims

1. Use as insulation for applications requiring resistance to a temperature of 1260°C of a saline soluble refractory fibre for which a vacuum cast preform of the fibre using 75g of fibre in 500 cm³ of 0.2% starch solution into a 120x65mm tool has a shrinkage of 3.5% or less, as measured by the method of the description, when exposed to 1260°C for 24 hours and comprising CaO, SiO₂, MgO, optionally ZrO₂, optionally less than 0.75mol% Al₂O₃, any incidental impurities amounting to less than 2mol% in total of which TiO₂ is less than 1.25 mol %, in which the amount of CaO is less than the sum of the amount of MgO and twice the amount of ZrO₂ and in which the SiO₂ excess (defined as the amount of SiO₂ calculated as remaining after the above named constituents are crystallised as silicates) exceeds 21.8mol%.

2. Use as insulation for applications requiring resistance to a temperature of 1260°C of a saline soluble refractory fibre as claimed in claim 1 in which the incidental impurities include TiO₂ in an amount less than 0.8mol%.

3. Use as insulation for applications requiring resistance to a temperature of 1260°C of a saline soluble refractory fibre as claimed in claim 1 in which the incidental impurities include Na₂O in an amount less than 1.0wt%, preferably less than 0.5wt%, more preferably less than 0.3wt%.

4. Use as insulation for applications requiring resistance to a temperature of 1260°C of a saline soluble refractory fibre as claimed in claim 1 in which the incidental impurities include Fe₂O₃ in an amount less than 1.0wt%, preferably less than 0.6wt%.

5. Use as insulation for applications requiring resistance to a temperature of 1260°C of a saline soluble refractory fibre as claimed in claim 1 in which Al₂O₃ is present in an amount less than 0.5mol%

6. Use as insulation for applications requiring resistance to a temperature of 1260°C of a saline soluble refractory fibre as claimed in any of claims 1 to 5 and in which (in mol%) the amount of MgO is greater than the amount of CaO.

7. Use as insulation for applications requiring resistance to a temperature of 1260°C of a saline soluble refractory fibre as claimed in claim 6 in which the fibre is selected from the group of fibres having the composition (in weight percent):-
| CaO | MgO | ZrO₂ | Al₂O₃ | TiO₂ | SiO₂ |
|---|---|---|---|---|---|
| 8.1 | 9.7 | 18.2 | 0.1 | | 63.1 |
| 10.5 | 9.9 | 17.6 | 0.1 | | 61.4 |
| 15 | 12.2 | 6.1 | 0.1 | | 65.7 |
| 11.7 | 9.1 | 15.6 | 0.1 | 0.1 | 62.7 |
| 13.2 | 9.7 | 11 | 0.1 | | 65.6 |
| 15.9 | 12.1 | 5.2 | 0.2 | | 65.7 |
| 12.5 | 10 | 13.6 | 0.3 | | 63.5 |
| 11.7 | 9 | 15.1 | 0.1 | 0.1 | 62.9 |
| 10.4 | 9.8 | 15.7 | 0.1 | | 63.7 |
| 12.4 | 9.9 | 15.8 | 0.2 | | 61.5 |
| 13.1 | 9.8 | 8.6 | 0.1 | | 67.4 |
| 15 | 11.2 | 11 | 0.1 | | 62.4 |
| 15.8 | 15 | 0.4 | 0.2 | 0.1 | 68.6 |
| 14.87 | 16.01 | 0.92 | 0.11 | | 66.67 |
| 13.1 | 10.6 | 10.2 | 0.3 | 0.1 | 65.2 |
| 18.5 | 13.5 | 1.7 | 0.2 | 1 | 65.1 |
| 17.9 | 13.1 | 0.8 | 0.3 | | 67.8 |
| 11.4 | 9.9 | 10.8 | 0.2 | | 67.8 |
| 12.4 | 10 | 17.5 | 0.2 | | 59.2 |
| 16.22 | 15.8 | | 0.49 | | 66.17 |
| 11.7 | 9.1 | 15 | 0.1 | 0.1 | 62.5 |
| 15.9 | 12 | 1.87 | 0.1 | 0.9 | 68.2 |
| 16.8 | 15.9 | 0.3 | 0.2 | 0.1 | 67.1 |
| 15.2 | 11.7 | 7.4 | 0.1 | 0.1 | 65.3 |
| 14.2 | 15.5 | 0.1 | 0.1 | 0.1 | 69.1 |
| 19.2 | 14.2 | 0.1 | 0.2 | | 66.1 |
| 15.4 | 11.6 | 5.8 | 0.2 | 1 | 65 |
| 11.9 | 9 | 15.1 | 1 | 0.1 | 61.6 |

8. Use as insulation for applications requiring resistance to a temperature of 1260°C of a saline soluble refractory fibre as claimed in any of claims 1 to 5 and in which (in mol%) the amount of MgO is less than the amount of CaO.

9. Use as insulation for applications requiring resistance to a temperature of 1260°C of a saline soluble refractory fibre as claimed in claim 8 in which the fibre is selected from the group of fibres having the composition (in weight percent):-
| CaO | MgO | ZrO₂ | Al₂O₃ | TiO₂ | SiO₂ |
|---|---|---|---|---|---|
| 13.4 | 5 | 17.5 | 0.2 | | 62.8 |
| 15.1 | 4.9 | 15.1 | 0.3 | | 63.6 |
| 16.5 | 5 | 12.6 | 0.2 | | 64.9 |
| 16.3 | 5 | 10.7 | 0.3 | | 67.1 |
| 16.6 | 11.3 | 5.3 | 0.6 | | 64.9 |
| 16.4 | 9.8 | 6.6 | 0.1 | | 66.8 |
| 16.2 | 9.7 | 5.7 | 0.5 | | 67.4 |
| 14.8 | 8.5 | 5.6 | 0.1 | | 69.4 |
| 14.9 | 4.9 | 17.3 | 0.3 | | 61.2 |
| 17 | 9.9 | 4.6 | 0.2 | | 67.2 |
| 17.5 | 9.9 | 7.4 | 0.2 | | 65 |
| 16.1 | 10 | 5.4 | 0.1 | | 67.7 |
| 16.4 | 9.9 | 4.7 | 0.2 | 0.1 | 68.3 |
| 16.3 | 9.8 | 3.6 | 0.2 | | 69.4 |
| 17.4 | 5.1 | 15.4 | 0.3 | | 60.8 |
| 16.2 | 11.5 | 5.4 | 0.2 | | 65.8 |
| 16 | 10 | 7 | 0.5 | | 66.5 |
| 15.4 | 9.9 | 10.7 | 0.1 | | 62.9 |
| 17.1 | 9.7 | 5.4 | 0.2 | | 66.6 |
| 17.4 | 10 | 5.8 | 0.2 | | 66.1 |
| 14.8 | 9.6 | 7 | 0.3 | | 67.3 |
| 16.1 | 9.8 | 8.6 | 0.2 | | 63.9 |
| 18.2 | 9.7 | 5.4 | 0.3 | | 65.7 |
| 18.5 | 9.8 | 7.4 | 0.2 | | 64.2 |
| 17.2 | 11.2 | 6.7 | 0.2 | | 63.5 |
| 17.4 | 9.9 | 6.8 | 0.2 | | 65.8 |
| 17.3 | 5 | 13.7 | 0.2 | | 62.7 |
| 14.5 | 10 | 13.3 | 0.1 | | 61.2 |
| 18.4 | 9.1 | 6.6 | 0.2 | | 64.8 |

## Patentansprüche

1. Verwendung einer in (Koch-)Salzlösung löslichen feuerfester Faser, bei der eine Vakuumgußvorform der Faser unter Verwendung von 75 g Faser in 500 cm³ 0,2 %-iger Stärkelösung in einem 120 x 65 mm-Werkzeug eine Schrumpfung von 3,5 % oder weniger bei Messung nach der Methode der Beschreibung aufweist, wenn sie 24 Stunden 1260 °C ausgesetzt wird, und welche CaO, SiO₂, MgO, gegebenenfalls ZrO₂, gegebenenfalls weniger als 0,75 mol-% Al₂O₃, aufweist, wobei alle zufälligen Verunreinigungen insgesamt weniger als 2 mol-% ausmachen, von denen TiO₂ weniger als 1,25 mol-% ist, wobei die Menge an CaO geringer ist als die Summe der Menge an MgO und dem zweifachen der Menge an ZrO₂, und wobei der SiO₂-Überschuss (definiert als die Menge an SiO₂, berechnet als zurückbleibend nach dem Kristallisieren der vorstehend aufgeführten Bestandteile als Silikate) 21,8 mol-% übersteigt, als Isolation für Anwendungen, die eine Temperaturbeständigkeit von 1260°C erfordern.

2. Verwendung einer in Salzlösung löslichen feuerfesten Faser als Isolation für Anwendungen, die eine Temperaturbeständigkeit von 1260°C erfordern, nach Anspruch 1, wobei die zufälligen Verunreinigungen TiO₂ in einer Menge von weniger als 0,8 mol-% einschließen.

3. Verwendung einer in Salzlösung löslichen feuerfesten Faser als Isolation für Anwendungen, die eine Temperaturbeständigkeit von 1260°C erfordern, nach Anspruch 1, wobei die zufälligen Verunreinigungen Na₂O in einer Menge von weniger als 1,0 Gewichts-%, vorzugsweise weniger als 0,5 Gewichts-%, bevorzugter weniger als 0,3 Gewichts-%, einschließen.

4. Verwendung einer in Salzlösung löslichen feuerfesten Faser als Isolation für Anwendungen, die eine Temperaturbeständigkeit von 1260°C erfordern, nach Anspruch 1, wobei die zufälligen Verunreinigungen Fe₂O₃ in einer Menge von weniger als 1,0 Gewichts-%, vorzugsweise weniger als 0,6 Gewichts-%, einschließen.

5. Verwendung einer in Salzlösung löslichen feuerfesten Faser als Isolation für Anwendungen, die eine Temperaturbeständigkeit von 1260°C erfordern, nach Anspruch 1, wobei Al₂O₃ in einer Menge von weniger als 0,5 mol-% vorliegt.

6. Verwendung einer in Salzlösung löslichen feuerfesten Faser als Isolation für Anwendungen, die eine Temperaturbeständigkeit von 1260°C erfordern, nach einem der Ansprüche 1 bis 5, wobei (in mol-%) die Menge an MgO größer als die Menge an CaO ist.

7. Verwendung einer in Salzlösung löslichen feuerfesten Faser als Isolation für Anwendungen, die eine Temperaturbeständigkeit von 1260°C erfordern, nach Anspruch 6, wobei die Faser ausgewählt wird aus der Gruppe von Fasern mit der Zusammensetzung (in Gewichtsprozent): -
| **CaO** | **MgO** | **ZrO**_{**2**} | **Al**_{**2**}**O**_{**3**} | **TiO**_{**2**} | **SiO**_{**2**} |
|---|---|---|---|---|---|
| 8.1 | 9.7 | 18.2 | 0.1 | | 63.1 |
| 10.5 | 9.9 | 17.6 | 0.1 | | 61.4 |
| 15 | 12.2 | 6.1 | 0.1 | | 65.7 |
| 11.7 | 9.1 | 15.6 | 0.1 | 0.1 | 62.7 |
| 13.2 | 9.7 | 11 | 0.1 | | 65.6 |
| 15.9 | 12.1 | 5.2 | 0.2 | | 65.7 |
| 12.5 | 10 | 13.6 | 0.3 | | 63.5 |
| 11.7 | 9 | 15.1 | 0.1 | 0.1 | 62.9 |
| 10.4 | 9.8 | 15.7 | 0.1 | | 63.7 |
| 12.4 | 9.9 | 15.8 | 0.2 | | 61.5 |
| 13.1 | 9.8 | 8.6 | 0.1 | | 67.4 |
| 15 | 11.2 | 11 | 0.1 | | 62.4 |
| 15.8 | 15 | 0.4 | 0.2 | 0.1 | 68.6 |
| 14.87 | 16.01 | 0.92 | 0.11 | | 66.67 |
| 13.1 | 10.6 | 10.2 | 0.3 | 0.1 | 65.2 |
| 18.5 | 13.5 | 1.7 | 0.2 | 1 | 65.1 |
| 17.9 | 13.1 | 0.8 | 0.3 | | 67.8 |
| 11.4 | 9.9 | 10.8 | 0.2 | | 67.8 |
| 12.4 | 10 | 17.5 | 0.2 | | 59.2 |
| 16.22 | 15.8 | | 0.49 | | 66.17 |
| 11.7 | 9.1 | 15 | 0.1 | 0.1 | 62.5 |
| 15.9 | 12 | 1.87 | 0.1 | 0.9 | 68.2 |
| 16.8 | 15.9 | 0.3 | 0.2 | 0.1 | 67.1 |
| 15.2 | 11.7 | 7.4 | 0.1 | 0.1 | 65.3 |
| 14.2 | 15.5 | 0.1 | 0.1 | 0.1 | 69.1 |
| 19.2 | 14.2 | 0.1 | 0.2 | | 66.1 |
| 15.4 | 11.6 | 5.8 | 0.2 | 1 | 65 |
| 11.9 | 9 | 15.1 | 1 | 0.1 | 61.6 |

8. Verwendung einer in Salzlösung löslichen feuerfesten Faser als Isolation für Anwendungen, die eine Temperaturbeständigkeit von 1260°C erfordern, nach einem der Ansprüche 1 bis 5, wobei (in mol-%) die Menge an MgO geringer als die Menge an CaO ist.

9. Verwendung einer in Salzlösung löslichen feuerfesten Faser als Isolation für Anwendungen, die eine Temperaturbeständigkeit von 1260°C erfordern, nach Anspruch 8, wobei die Faser ausgewählt wird aus der Gruppe von Fasern mit der Zusammensetzung (in Gewichtsprozent): -
| **CaO** | **MgO** | **ZrO**_{**2**} | **Al**_{**2**}**O**_{**3**} | **TiO**_{**2**} | **SiO**_{**2**} |
|---|---|---|---|---|---|
| 13.4 | 5 | 17.5 | 0.2 | | 62.8 |
| 15.1 | 4.9 | 15.1 | 0.3 | | 63.6 |
| 16.5 | 5 | 12.6 | 0.2 | | 64.9 |
| 16.3 | 5 | 10.7 | 0.3 | | 67.1 |
| 16.6 | 11.3 | 5.3 | 0.6 | | 64.9 |
| 16.4 | 9.8 | 6.6 | 0.1 | | 66.8 |
| 16.2 | 9.7 | 5.7 | 0.5 | | 67.4 |
| 14.8 | 8.5 | 5.6 | 0.1 | | 69.4 |
| 14.9 | 4.9 | 17.3 | 0.3 | | 61.2 |
| 17 | 9.9 | 4.6 | 0.2 | | 67.2 |
| 17.5 | 9.9 | 7.4 | 0.2 | | 65 |
| 16.1 | 10 | 5.4 | 0.1 | | 67.7 |
| 16.4 | 9.9 | 4.7 | 0.2 | 0.1 | 68.3 |
| 16.3 | 9.8 | 3.6 | 0.2 | | 69.4 |
| 17.4 | 5.1 | 15.4 | 0.3 | | 60.8 |
| 16.2 | 11.5 | 5.4 | 0.2 | | 65.8 |
| 16 | 10 | 7 | 0.5 | | 66.5 |
| 15.4 | 9.9 | 10.7 | 0.1 | | 62.9 |
| 17.1 | 9.7 | 5.4 | 0.2 | | 66.6 |
| 17.4 | 10 | 5.8 | 0.2 | | 66.1 |
| 14.8 | 9.6 | 7 | 0.3 | | 67.3 |
| 16.1 | 9.8 | 8.6 | 0.2 | | 63.9 |
| 18.2 | 9.7 | 5.4 | 0.3 | | 65.7 |
| 18.5 | 9.8 | 7.4 | 0.2 | | 64.2 |
| 17.2 | 11.2 | 6.7 | 0.2 | | 63.5 |
| 17.4 | 9.9 | 6.8 | 0.2 | | 65.8 |
| 17.3 | 5 | 13.7 | 0.2 | | 62.7 |
| 14.5 | 10 | 13.3 | 0.1 | | 61.2 |
| 18.4 | 9.1 | 6.6 | 0.2 | | 64.8 |

## Revendications

1. Utilisation en tant qu'isolation pour des applications nécessitant une résistance à une température de 1260°C d'une fibre réfractaire soluble en solution saline pour laquelle une préforme coulée sous vide de la fibre utilisant 75 g de fibre dans 500 cm³ d'une solution d'amidon à 0,2 % dans un outil de 120 × 65 mm a un retrait de 3,5 % ou moins, tel que mesuré par le procédé de la description, lors d'une exposition à 1260°C pendant 24 heures et comprenant du CaO, du SiO₂, du MgO, éventuellement du ZrO₂, éventuellement moins de 0,75 % en moles de Al₂O₃, moins de 2 % en moles au total des éventuelles impuretés parasites, parmi lesquelles le TiO₂ est inférieur à 1,25 % en moles, la quantité de CaO étant inférieure à la somme de la quantité de MgO et de deux fois la quantité de ZrO₂, et l'excès de SiO₂ (défini comme étant la quantité de SiO₂ calculée restante après que les constituants énumérés ci-dessus ont cristallisé sous forme de silicate) étant supérieur à 21,8 % en moles.

2. Utilisation en tant qu'isolation pour des applications nécessitant une résistance à une température de 1260°C d'une fibre réfractaire soluble en solution saline selon la revendication 1, dans laquelle les impuretés parasites comprennent du TiO2 en une quantité inférieure à 0,8 % en moles.

3. Utilisation en tant qu'isolation pour des applications nécessitant une résistance à une température de 1260°C d'une fibre réfractaire soluble en solution saline selon la revendication 1, dans laquelle les impuretés parasites comprennent du Na2O en une quantité inférieure à 1,0 % en poids, de préférence inférieure à 0,5 % en poids et mieux encore inférieure à 0,3 % en poids.

4. Utilisation en tant qu'isolation pour des applications nécessitant une résistance à une température de 1260°C d'une fibre réfractaire soluble en solution saline selon la revendication 1, dans laquelle les impuretés parasites comprennent du Fe2O3 en une quantité inférieure à 1,0 % en poids, de préférence inférieure à 0,6 % en poids.

5. Utilisation en tant qu'isolation pour des applications nécessitant une résistance à une température de 1260°C d'une fibre réfractaire soluble en solution saline selon la revendication 1, dans laquelle Al2O3 est présent en une quantité inférieure à 0,5 % en moles.

6. Utilisation en tant qu'isolation pour des applications nécessitant une résistance à une température de 1260°C d'une fibre réfractaire soluble en solution saline selon l'une quelconque des revendications 1 à 5, dans laquelle (en % en moles) la quantité de MgO est supérieure à la quantité de CaO.

7. Utilisation en tant qu'isolation pour des applications nécessitant une résistance à une température de 1260°C d'une fibre réfractaire soluble en solution saline selon la revendication 6, dans laquelle la fibre est sélectionnée parmi le groupe de fibres ayant la composition (en pourcent en poids) :
| CaO | MgO | ZrO₂ | Al₂O₃ | TiO₂ | SiO₂ |
|---|---|---|---|---|---|
| 8,1 | 9,7 | 18,2 | 0,1 | | 63,1 |
| 10,5 | 9,9 | 17,6 | 0,1 | | 61,4 |
| 15 | 12,2 | 6,1 | 0,1 | | 65,7 |
| 11,7 | 9,1 | 15,6 | 0,1 | 0,1 | 62,7 |
| 13,2 | 9,7 | 11 | 0,1 | | 65,6 |
| 15,9 | 12,1 | 5,2 | 0,2 | | 65,7 |
| 12,5 | 10 | 13,6 | 0,3 | | 63,5 |
| 11,7 | 9 | 15,1 | 0,1 | 0,1 | 62,9 |
| 10,4 | 9,8 | 15,7 | 0,1 | | 63,7 |
| 12,4 | 9,9 | 15,8 | 0,2 | | 61,5 |
| 13,1 | 9,8 | 8,6 | 0,1 | | 67,4 |
| 15 | 11,2 | 11 | 0,1 | | 62,4 |
| 15,8 | 15 | 0,4 | 0,2 | 0,1 | 68,6 |
| 14,87 | 16,01 | 0,92 | 0,11 | | 66,67 |
| 13,1 | 10,6 | 10,2 | 0,3 | 0,1 | 65,2 |
| 18,5 | 13,5 | 1,7 | 0,2 | 1 | 65,1 |
| 17,9 | 13,1 | 0,8 | 0,3 | | 67,8 |
| 11,4 | 9,9 | 10,8 | 0,2 | | 67,8 |
| 12,4 | 10 | 17,5 | 0,2 | | 59,2 |
| 16,22 | 15,8 | | 0,49 | | 66,17 |
| 11,7 | 9,1 | 15 | 0,1 | 0,1 | 62,5 |
| 15,9 | 12 | 1,87 | 0,1 | 0,9 | 68,2 |
| 16,8 | 15,9 | 0,3 | 0,2 | 0,1 | 67,1 |
| 15,2 | 11,7 | 7,4 | 0,1 | 0,1 | 65,3 |
| 14,2 | 15,5 | 0,1 | 0,1 | 0,1 | 69,1 |
| 19,2 | 14,2 | 0,1 | 0,2 | | 66,1 |
| 15,4 | 11,6 | 5,8 | 0,2 | 1 | 65 |
| 11,9 | 9 | 15,1 | 1 | 0,1 | 61,6 |

8. Utilisation en tant qu'isolation pour des applications nécessitant une résistance à une température de 1260°C d'une fibre réfractaire soluble en solution saline selon l'une quelconque des revendications 1 à 5, et dans laquelle (en % en moles) la quantité de MgO est inférieure à la quantité de CaO.

9. Utilisation en tant qu'isolation pour des applications nécessitant une résistance à une température de 1260°C d'une fibre réfractaire soluble en solution saline selon la revendication 8, dans laquelle la fibre est sélectionnée parmi le groupe de fibres ayant la composition (en pourcent en poids) :
| CaO | MgO | ZrO₂ | Al₂O₃ | TiO₂ | SiO₂ |
|---|---|---|---|---|---|
| 13,4 | 5 | 17,5 | 0,2 | | 62,8 |
| 15,1 | 4,9 | 15,1 | 0,3 | | 63,6 |
| 16,5 | 5 | 12,6 | 0,2 | | 64,9 |
| 16,3 | 5 | 10,7 | 0,3 | | 67,1 |
| 16,6 | 11,3 | 5,3 | 0,6 | | 64,9 |
| 16,4 | 9,8 | 6,6 | 0,1 | | 66,8 |
| 16,2 | 9,7 | 5,7 | 0,5 | | 67,4 |
| 14,8 | 8,5 | 5,6 | 0,1 | | 69,4 |
| 14,9 | 4,9 | 17,3 | 0,3 | | 61,2 |
| 17 | 9,9 | 4,6 | 0,2 | | 67,2 |
| 17,5 | 9,9 | 7,4 | 0,2 | | 65 |
| 16,1 | 10 | 5,4 | 0,1 | | 67,7 |
| 16,4 | 9,9 | 4,7 | 0,2 | 0,1 | 68,3 |
| 16,3 | 9,8 | 3,6 | 0,2 | | 69,4 |
| 17,4 | 5,1 | 15,4 | 0,3 | | 60,8 |
| 16,2 | 11,5 | 5,4 | 0,2 | | 65,8 |
| 16 | 10 | 7 | 0,5 | | 66,5 |
| 15,4 | 9,9 | 10,7 | 0,1 | | 62,9 |
| 17,1 | 9,7 | 5,4 | 0,2 | | 66,6 |
| 17,4 | 10 | 5,8 | 0,2 | | 66,1 |
| 14,8 | 9,6 | 7 | 0,3 | | 67,3 |
| 16,1 | 9,8 | 8,6 | 0,2 | | 63,9 |
| 18,2 | 9,7 | 5,4 | 0,3 | | 65,7 |
| 18,5 | 9,8 | 7,4 | 0,2 | | 64,2 |
| 17,2 | 11,2 | 6,7 | 0,2 | | 63,5 |
| 17,4 | 9,9 | 6,8 | 0,2 | | 65,8 |
| 17,3 | 5 | 13,7 | 0,2 | | 62,7 |
| 14,5 | 10 | 13,3 | 0,1 | | 61,2 |
| 18,4 | 9,1 | 6,6 | 0,2 | | 64,8 |
